(19) Europäisches Patentamt
European Patent Office
Office européen des brevets

(11) EP 1 551 897 B1

(12) # EUROPÄISCHE PATENTSCHRIFT

(45) Veröffentlichungstag und Bekanntmachung des Hinweises auf die Patenterteilung:
**01.08.2018 Patentblatt 2018/31**

(21) Anmeldenummer: **03750593.0**

(22) Anmeldetag: **22.09.2003**

(51) Int Cl.:
***C08G 18/78*** *(2006.01)* ***C08G 18/67*** *(2006.01)*
***C09D 175/16*** *(2006.01)*

(86) Internationale Anmeldenummer:
**PCT/EP2003/010499**

(87) Internationale Veröffentlichungsnummer:
**WO 2004/033522 (22.04.2004 Gazette 2004/17)**

(54) **NIEDRIGVISKOSE STRAHLENHÄRTENDE UND THERMISCH HÄRTENDE POLYISOCYANATE ENTHALTEND OXADIAZINTRIONGUPPEN**

LOW-VISCOSITY BEAM-HARDENED AND THERMALLY HARDENED POLYISOCYANATES CONTAINING OXADIAZINTRION GROUPS

POLYISOCYANATES DE FAIBLE VISCOSITE, RADIODURCISSABLES ET THERMODURCISSABLES, CONTENANT DES GROUPES OXADIAZINE-TRIONE

(84) Benannte Vertragsstaaten:
**AT BE BG CH CY CZ DE DK EE ES FI FR GB GR HU IE IT LI LU MC NL PT RO SE SI SK TR**

(30) Priorität: **04.10.2002 DE 10246512**

(43) Veröffentlichungstag der Anmeldung:
**13.07.2005 Patentblatt 2005/28**

(73) Patentinhaber: **Allnex Netherlands B.V.**
**4612 RB Bergen op Zoom (NL)**

(72) Erfinder:
- **FÄCKE, Thomas**
**Bridgeville, PA 15017 (US)**
- **WEIKARD, Jan**
**51519 Odenthal (DE)**
- **FISCHER, Wolfgang**
**40668 Meerbusch (DE)**

(74) Vertreter: **Destryker, Elise Martine**
**Allnex Belgium S.A.**
**Patent Department**
**Anderlechtstraat 33**
**1620 Drogenbos (BE)**

(56) Entgegenhaltungen:
**EP-A- 0 825 211** **EP-A- 0 867 457**
**EP-A- 1 002 818** **WO-A-00/39183**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft ein Verfahren zur Herstellung niedrigviskoser Polyisocyanate oder deren Folgeprodukte, die aktivierte, strahlenhärtbare Doppelbindungen tragen, und gegebenenfalls auch thermisch aushärten können, sowie niedrigviskose Polyisocyanatgemische oder deren Folgeprodukte und deren Verwendung in Beschichtungsmitteln.

Die Härtung von aktivierten Doppelbindungen tragende Beschichtungssysteme durch Strahlung, wie z. B. UV-Licht, IR-Strahlung oder auch Elektronenstrahlung ist bekannt und technisch etabliert. Es ist eine der schnellsten Härtungsmethoden in der Beschichtungstechnologie. Problematisch ist allerdings häufig die Haftung. Zudem ist die Aushärtung von durch elektromagnetischer Strahlung härtbaren Beschichtungen von einer ausreichenden Strahlungsdosis abhängig. In schlecht oder nicht belichteten Bereichen führt dies zu einer deutlich verschlechterten Aushärtung bzw. zu gar keiner Vernetzung.

Bindemittel auf der Basis von Polyisocyanaten und Polyolen eignen sich hervorragend zur Herstellung von hochwertigen Beschichtungen. Die Einstellung der gewünschten Lackeigenschaften wie z.B. Haftung, Elastizität, Chemikalienbeständigkeit, Wetterstabilität oder Kratzfestigkeit durch Variation der Einsatzstoffe ist in weiten Grenzen möglich.

Die Kombination dieser beiden von einander unabhängigen Härtungsmechanismen in einem Bindemittelsystem erlaubt es, deren positiven Eigenschaften zu vereinen. Derartige sogenannte "Dual Cure" Systeme sind bekannt. So beschreibt das US-Patent US-A 4 342 793 die Verwendung von Beschichtungssystemen aufgebaut aus einem strahlenhärtbaren Reaktivverdünner z. B. Acrylsäureester, sowie einem Polyol und einem Polyisocyanat. Problematisch ist hier, dass in nicht belichteten Bereichen der strahlenhärtbare Reaktivverdünner als Weichmacher zurückbleibt und somit die Filmeigenschaften negativ beeinflusst bzw. den Film sogar verlassen kann, was zu unerwünschten, physiologischen Wirkungen führen kann.

Weiterhin bekannt sind "Dual Cure" Bindemittel, deren strahlenhärtbare Komponenten chemisch mit dem Polyisocyanat verknüpft sind, so dass die beschriebenen Effekte vermieden werden können. So lehrt die europäische Patentanmeldung EP-A 0 928 800 die Verwendung von NCO funktionellen, Isocyanuratgruppen haltigen Urethanacrylaten als Bestandteil eines "Dual Cure" Beschichtungssystems. Zur einfachen Applikation dieser Beschichtungsmittel sind hinreichend niedrige Viskositäten erforderlich, so dass man sich verschiedener organischer Lösungsmittel bedient.

Bedingt durch die ökologischen und ökonomischen Anforderungen an moderne Lacksysteme möglichst wenig oder gar kein organisches Lösungsmittel zur Viskositätserniedrigung zu verwenden, besteht der Wunsch, niedrigviskose Lackrohstoffe zu verwenden. Bekannt hierfür sind seit langem Polyisocyanate mit Allophanatstruktur wie u. a. das europäische Patent EP-A 0 682 012 beschreibt.

Allophanate sind seit langem in Beschichtungsmitteln bekannt (siehe auch GB-PS 994 890, EP-A-0 000 194) und werden in der Technik über die Umsetzung eines einoder mehrwertigen Alkohols mit überschüssigem aliphatischen oder cycloaliphatischen Diisocyanat hergestellt. Anschließend erfolgt die Entfernung nicht reagierten Diisocyanats mittels Abdestillation im Vakuum. Auch gemischte, aliphatisch/aromatische "Heteroallophanate" sind aus der EP 0 712 840 bekannt.

Die Herstellung von allophanathaltigen, strahlenhärtenden Bindemittel auf Polyurethanbasis beschreibt die EP-A 0867457. Diese Bindemittel besitzen aber keine freien NCO-Gruppen mehr, weisen Viskositäten von über 10000 mPa·s bei 25°C (Beispiel 6-8) auf und besitzen keine aktivierten Doppelbindungen, sondern unreaktive Allylethergruppen (Struktur $R-CH_2-CH=CH_2$). Daher benötigt man den Zusatz von Reaktivverdünnern (niedermolekulare Ester der Acrylsäure), die die notwendige UV-Reaktivität einbringen. Für ein Dual Cure Prozess sind diese Substanzen nicht verwendbar.

Isocyanathaltige Dual Cure Bindemittel mit Allophanatstruktur und aktivierten Doppelbindungen sind in der deutschen Offenlegungsschrift DE-A 198 60 041 beschrieben. Das Verfahren nutzt den herkömmlichen Ansatz mit überschüssigem Diisocyanat, wobei in einer anschließend notwendigen Dünnschichtdestillation die unerwünschten, nicht reagierten monomeren Diisocyanate wieder zu entfernen sind. Dieses Vorgehen hat aber den großen Nachteil, dass mit einer hohen thermischen Belastung während der Destillation bei 135°C zu rechnen ist und so insbesondere die aktivierte Doppelbindung unter diesen Bedingungen zur Polymerisation neigt. Niedrigere Temperaturen reichen nicht aus, den Anteil an arbeitshygienisch nicht tolerierbaren Diisocyanatmonomeren hinreichend zu minimieren. Das Verfahren erweist sich somit als technisch kaum durchführbar.

EP-A 0 825 211 beschreibt ein Verfahren zum Aufbau von Allophanatstrukturen durch die Umsetzung von Diisocyanatooxadiazintrionen mit Phenolen, gesättigten, aliphatischen oder cycloaliphaten oder araliphatischen Mono- oder Polyalkoholen. Als Katalysator für die Umsetzung dienen basische Verbindungen, besonders bevorzugt mit einem pKa-Wert von größer 7.5. Eine Stablisierung von Doppelbindungen wird nicht beschrieben.

Der vorliegenden Erfindung liegt nun die Aufgabe zugrunde, Urethanacrylate und Dual Cure Bindemittel mit aktivierten Doppelbindung(en) zur Verfügung zu stellen, die bei ihrer Herstellung bzw. Nachbehandlung nur Temperaturen von unter 100°C benötigen. Zudem sollten die gewünschten Bindemittel, insbesondere bei Minimierung oder

Vermeidung flüchtiger organischer Lösungsmittel (VOC = volatile organic compounds), hinreichend niedrige Viskositäten kleiner 10000 mPas bei Raumtemperatur besitzen.

Es wurde nun gefunden, dass aus der Umsetzung von Oxadiazintrionen mit Alkoholen, die eine aktivierte Doppelbindung enthalten, niedrigviskose isocyanatfunktionelle Dual Cure Bindemittel erhalten werden. Dies war insbesondere überaschend, da EP-A 0 825 211 lehrt, dass die üblichen phenolischen Stabilisatoren der Acrylatgruppen ebenfalls mit Oxadiazintrionen reagieren sollten und so eine unerwünschte, vorzeitige Polymerisation zu erwarten war und somit dieser Syntheseweg unbrauchbar sein sollte.

Gegenstand der Erfindung ist ein Verfahren zur Herstellung eines Polyisocyanats oder Polyisocyanatfolgeprodukts enthaltend mindestens eine Allophanatgruppe, die an dem über zwei Einfachbindungen gebundenen Sauerstoffatom der Allophanatgruppe mindestens eine Acrylat-, Methacrylat- oder Vinylether-Doppelbindung trägt, dadurch gekennzeichnet, dass ein Polyisocyanat oder Polyisocyanatfolgeprodukt enthaltend mindestens eine Oxadiazintriongruppe (Formel 1)

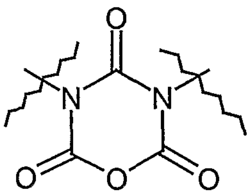

Formel 1

mit einem Acrylat-, Methacrylat- oder Vinylether-Doppelbindung haltigen Alkohol bei Temperaturen zwischen -20 bis 100°C reagiert.

Polyisocyanate oder Polyisocyanatfolgeprodukt, die durch das erfindungsgemäße Verfahren erhältlich sind, d.h. durch die Umsetzung eines Oxadiazintrion (Formel 1) funktionellen Polyisocyanats oder Polyisocyanatfolgeprodukts mit einem Acrylat-, Methacrylat- oder Vinylether-Doppelbindung haltigen Alkohol bei Temperaturen zwischen -20-100°C sowie unter Zusatz eines basischen Katalysators sowie eines oder mehrerer Stabilisatoren lassen sich durch Formel 2 detaillierter beschreiben.

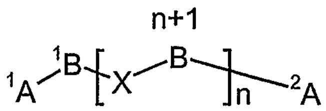

Formel 2

Die Platzhalter in Formel 2 seien im Folgenden erläutert.

${}^{1}A$, ${}^{2}A$ stehen für Isocyanat oder für gleiche oder verschiedene Strukturen von Isocyanat-Folgeprodukten, welche Iminooxadiazindion-, Isocyanurat-, Uretdion-, Urethan-, Allophanat-, Biuret- Harnstoff- oder Oxadiazintrion-Strukturen enthalten und N-ständig die untengenannten Reste ${}^{1}B$ bis ${}^{n+1}B$ tragen

${}^{1}B$ bis ${}^{n+1}B$ sind gleiche oder verschiedene Reste, die durch gedankliche Abstraktion der beiden Isocyanatgruppen eines aliphatischen, cycloaliphatischen oder araliphatischen Diisocyanats entstehen,

X steht für eine der Strukturen X-1 und/oder X-2,
sowie gegebenenfalls anteilig gleiche oder verschiedene Reste von Isocyanat-Folgeprodukten, welche Iminooxadiazindion-, Isocyanurat-, Uretdion-, Urethan-, Allophanat-, Biuret- Harnstoff- oder Oxadiazintrion-Strukturen enthalten

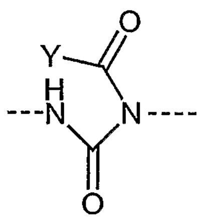

Struktur X-1

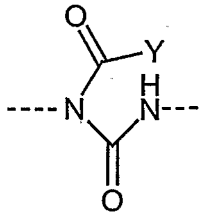

Struktur X-2

Y steht für einen organischen Rest, der mindestens eine aktivierte Doppelbindung enthält;

n eine Zahl größer als eins und kleiner als 20 ist, und dabei das Mittel aller im erfindungsgemäßen Verbindung vorliegenden Moleküle der Formel 2 darstellt.

Bei den Teilstrukturen $^1A$, $^2A$ handelt es sich um Isocyanat oder um gleiche oder verschiedene Strukturen von Isocyanat-Folgeprodukten, welche vom Iminooxadiazindion-, Isocyanurat-, Uretdion-, Urethan-, Allophanat-, Biuret- Harnstoffoder Oxadiazintrion-Strukturtyp sind und N-ständig die untengenannten Reste B tragen. Bevorzugt stehen $^1A$, $^2A$ für Isocyanatgruppen, blockierte Isocyanatgruppen oder Urethangruppen. Als Urethangruppen sind bevorzugt Urethane, die einen ungesättigten Rest Y aufweisen und durch Reaktion jeweils eines Moleküls H-Y mit einer Isocyanatgruppe entstehen, besonders bevorzugt sind Urethane, die die gleichen Reste tragen, so dass $^1A$ gleich $^2A$ ist. Besonders bevorzugt stehen $^1A$, $^2A$ für Isocyanatgruppen, in diesem Fall ist $^1A = {}^2A$.

Bei den Teilstrukturen $^1B$ bis $^{n+1}B$ handelt es sich um diejenigen Reste, die durch gedankliche Abstraktion der beiden Isocyanatgruppen eines aliphatischen, cycloaliphatischen oder araliphatischen Diisocyanats entstehen und durch die Umsetzung eines auf Basis eines oder mehrerer dieser Diisocyanate basierenden Oxadiazintrions in das Bindemittel eingebaut werden kann.

Die Gehalte der funktionellen Gruppen in den Produkten nach dem erfindungsgemäßen Verfahren nach $^{13}C$-NMR (siehe Beispiele) sind bevorzugt folgendermaßen begrenzt

2-35 % Allophanat (wie in den Strukturen X-1 und X-2 enthalten),
0,1-5 % Uretdion
0-5 % Oxadiazintrion
0,1-25 % Urethan.

Bevorzugte Ausgangsstoffe enthaltend mindestens eine Oxadiazintriongruppe für die Synthese der erfindungsgemäßen Polyisocyanate oder Polyisocyanatfolgeprodukte können durch Umsetzung von aliphatischen, cycloaliphatischen und oder araliphatischen Di- oder Polyisocyanaten mit Kohlendioxid hergestellt werden. Beispiele bevorzugter aliphatischer, cycloaliphatischer und oder araliphatischer Diisocyanate umfassen Ethylendiisocyanat, 1,4-Diisocyanatobutan, 1,6-Diisocyanatohexan, Trimethylhexandiisocyanat, 1,3- und 1,4-bis-isocyanatomethylcyclohexan, Isophorondiisocyanat, 4,4'-Diisocyanatodicyclohexylmethan und die araliphatischen Diisocyanate 1,3- und 1,4-Xylylendiisocyanate (XDI Handelsprodukt der Fa. Takeda, Japan) oder Mischungen hiervon. Bevorzugt ist 1,6-Diiisocyanatohexan.

Bevorzugte Polyisocyanate enthaltend mindestens ein Oxadiazintriongruppe entsprechen der allgemeinen Formel 5,

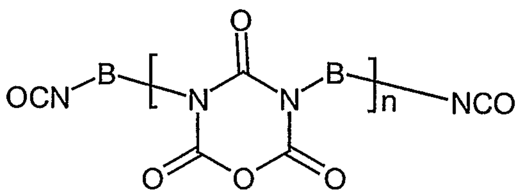

Struktur 5

wobei n, in den hier bevorzugten Oxadiazintrionen als Edukte zur Synthese für die erfindungsgemäßen Bindemittel, in Formel 5 einer Zahl größer als 1 und kleiner als 20 entspricht, und in ein und demselben Polyisocyanat in der Regel Moleküle mit unterschiedlichem $n_i$ gleichzeitig vorliegen. Bevorzugt sind diejenigen Oxadiazin-trione mit einem Mittelwert

$$n = \frac{\sum_i n_i}{i},$$

der kleiner 10, bevorzugt kleiner 5 und besonders bevorzugt kleiner 3 ist.

Derartige Polyisocyanate sind kommerziell erhältlich (Baymicron Oxa WM06®, Fa. Bayer AG). Die Herstellung wird in der deutschen Patentanmeldung DE 167066 beschrieben. Bei der Herstellung des Oxadiazintrions gemäß dieser Anmeldung entstehen je nach Reaktionsbedingungen Uretdiongruppen zu 0.1 - 5 Gew.-%.

Bevorzugte Polyisocyanatfolgeprodukte enthaltend mindestens ein Oxadiazintriongruppe entsprechen der allgemeinen Formel 6,

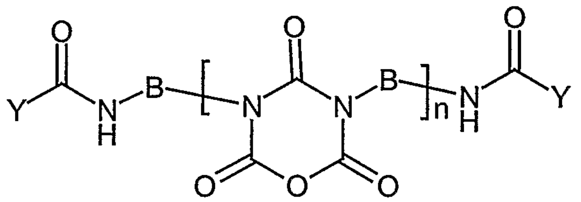

Struktur 6

Sie werden bevorzugt durch Umsetzung von Polyisocyanaten enthaltend mindestens ein Oxadiazintriongruppe entsprechen der allgemeinen Formel 5 mit Verbindungen H-Y hergestellt.

Bei der Teilstruktur Y handelt es sich um einen Rest der mindestens eine durch elektromagnetische Strahlung polymerisierbare Doppelbindung enthält und durch gedankliche Abstraktion des Protons aus der mit Isocyanaten reaktiven funktionelle Gruppe dieses Restes gebildet wird. Mit Isocyanaten reaktive funktionelle Gruppe sind Alkohol (-OH), Amin (NH) oder Thiol (SH) Gruppen gemeint, bevorzugt sind Amin- und Alkoholgruppen, besonders bevorzugt sind Alkoholgruppen. Mit durch elektromagnetische Strahlung polymerisierbare Doppelbindungen sind Vinyl-, Vinylether-, Propenyl-, Allyl-, Maleinyl-, Fumaryl-, Maleinimid-, Dicyclopentadienyl-, Acrylamid-, Acryl- und Methacryl-Gruppen gemeint, bevorzugt sind Vinylether-, Acryl- und Methacryl-Gruppen, besonders bevorzugt sind Acrylgruppen.

Die in der Struktur X-1 und X-2 beschriebene Allophanatgruppe und die in den Strukturen $^1A$, $^2A$ gegebenenfalls enthaltenen Urethangruppen basieren auf der Teilstruktur Y und diese auf dem besonders bevorzugt eingesetzten von Y gedanklich ableitbaren Alkohol, wobei auch Mischungen verschiedener Alkohole Verwendung finden können

Erfindungsgemäß werden die Polyisocyanate oder die Polyisocyanatfolgeprodukte enthaltend mindestens eine Oxadiazintriongruppe mit beispielsweise diesen Alkoholen umgesetzt.

Bevorzugte Alkohole sind dabei 2-Hydroxyethyl(meth)acrylat, Polyethylenoxid-mono(meth)acrylat (PEA6 / PEM6; Laporte Performance Chemicals Ltd.), Polypropylenoxidmono(meth)acrylat (PPA6, PPM5S; Laporte Performance Chemicals Ltd.), Polyalkylenoxidmono(meth)acrylat (PEM63P, Laporte Performance Chemicals Ltd.), Poly(ε-caprolacton)mono(meth)acrylate wie z.B. (Tone M100®; Union Carbide), 2-Hydroxypropyl(meth)acrylat, 4-Hydroxybutyl(meth)-acrylat, 3-Hydroxy-2,2-dimethylpropyl(meth)acrylat, die Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische; bevorzugterweise die acrylierten Monoalkohole wie Glycerindi(meth)acrylat, Trime-thylolpropandi(meth)acrylat, Pentaerythrittri(meth)acrylat, Dipentaerythritpenta-(meth)acrylat. Erfindungsgemäß sind auch Alkohole, die sich aus der Umsetzung von doppelbindungshaltigen Säuren mit gegebenenfalls doppelbindungshaltigen Epoxidverbindungen erhalten lassen, so z.B. die Umsetzungsprodukte von (Meth)acrylsäure mit Glycidyl(meth)acrylat oder Bisphenol-A-diglycidylether.

Die Teilstrukturen X können neben Allophantstrukturen X-1 und X-2 gegebenenfalls anteilig weitere gleiche oder verschiedene Reste von Isocyanat-Folgeprodukten, welche Iminooxadiazindion-, Isocyanurat-, Uretdion-, Urethan-, Allophanat-, Biuret-Harnstoff- oder Oxadiazintrion-Strukturen enthalten, enthalten. Bevorzugt sind Strukturen vom Urethantyp, die durch Reaktion eines Dialkohols mit Isocyanatgruppen entstehen. Dabei finden besonders bevorzugt Ethylenglycol, Diethylenglycol, Triethylenglycol, Tetraethylenglycol, Dipropylenglycol, Tripropylenglycol, kurzkettige Polyether auf Basis von Ethylenoxid, Propylenoxid oder Gemische daraus, 1,2- und 1,3-Propandiol, die isomeren Butandiole, Neopentylglycol, 1,6-Hexandiol, 2-Ethyl-1,3-hexandiol, Cyclohexandimethanol, Mono(meth)acrylate des Trimethylolpropans und -ethans, des Glycerins, und deren epoxilierten und propoxylierten Derivate bzw. die durch Veresterung selbiger Alkohole mit Acrylsäure erhältlichen technischen Gemische, 2-Aminoethanol und die isomeren Aminopropanole Verwendung. Auch kurzkettige Polyesterdiole wie z.B. ε-Caprolacton verlängerte Diole wie Ethandiol, 1,2- und 1,3-Propandiol, die isomeren Butandiole, Neopentylglycol, 1,6-Hexandiol, 2-Ethyl-1,3-hexandiol, Cyclohexandimethanol werden verwendet. Bevorzugt sind Diole wie Ethandiol, Hexandiol, Mono(meth)-acrylate des Trimethylolpropans und des Glycerins, besonders bevorzugt sind Ethandiol und Hexandiol.

Im erfindungsgemäßen Verfahren wird das Oxadiazintrion haltige Polyisocyanat oder Polyisocyanatfolgeprodukte vorgelegt, auf -20 bis 100°C, bevorzugt auf 0 bis 100°C oder 20 bis 80°C und besonders bevorzugt auf 40 bis 60°C temperiert und die erforderliche Menge an Stabilisator darin gelöst. Nach der Zugabe des eine aktivierte Doppelbindung enthaltenden Alkohols und eines geeigneten Katalysators bildet sich spontan Kohlendioxid, das gasförmig entweicht. Das Entfernen des Kohlendioxids aus der Reaktionsmischung kann durch Anlegen von Vakuum zwischen

800 und 0 mbar, bzw. zwischen 200 und 10 mbar oder durch Einleiten eines inerten Gases wie Luft oder Stickstoff beschleunigt werden. Bevorzugt wird gegen Ende der Umsetzung ein Vakuum von 200 bis 10 mbar angelegt und aufrecht erhalten, bis keine Kohlendioxid-Entwicklung mehr nachweisbar ist.

Bei der Umsetzung kann ein inertes Lösungsmittel, wie z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid verwendet werden, bevorzugt wird aber kein Lösungsmittel zugesetzt. Alternativ kann die Umsetzung auch in Verdünnungsmitteln, die bei der UV-Härtung ebenfalls (co)polymerisieren, durchgeführt werden. Solche Reaktiwerdünner sind beschrieben in P. K. T. Oldring (Ed.), Chemistry & Technology of UV & EB Formulations For Coatings, Inks & Paints, Vol. 2, 1991, SITA Technology, London, S. 237 - 285. Als Beispiele seien genannt die Ester der Acrylsäure oder Methacrylsäure, bevorzugt der Acrylsäure der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Dreiwertige Alkohole sind Glycerin oder Trimethylolpropan oder deren alkoxylierte Derivate. Vierwertige Alkohole sind Pentaerythrit oder dessen alkoxylierte Derivate. Bevorzugte Alkohole weisen einen geringen Hydroxylgehalt, besonders bevorzugt unter 20 mg/g KOH auf.

Strahlenhärtende Bindemittel mit z.B. Acrylatgruppen müssen vor einer spontanen Polymerisation geschützt werden. Daher gibt man phenolische Stabilisatoren zu, die die Polymerisation inhibieren. Andere Stabilisatoren wie z. B. die Klasse der HALS-Stabilisatoren (HALS = hindered amine light stabilizers) haben dagegen, wie dem Fachmann bekannt ist, den Nachteil keine so effektive Stabilisierung zu ermöglichen. Vielmehr findet man dann eine "schleichende" radikalische Polymerisation statt.

Es kann sinnvoll sein, vor dem Anlegen des Vakuums noch einen weiteren Stabilisator, bevorzugt einen nicht phenolischen Stabilisator zuzusetzen. Flüchtige Katalysatoren werden bei dieser Prozedur zudem noch teilweise oder vollständig aus der Reaktionsmischung entfernt. In der Regel wird abschließend für eine Langzeitstabilität nochmals mit einem phenolischen Stabilisator nachstabilisiert und ggf. mit Luft das Reaktionsprodukt gesättigt.

Allgemein geeignete Katalysatoren sind Verbindungen mit einem pKa > 7.5. Dabei sind für jeden eingesetzten doppelbindungshaltigen Alkohol unterschiedliche Katalysatoren besser geeignet. Insbesondere was den Reaktionsumsatz am Oxadiazintrionring angeht und die Neigung zur Polymerisation des Ansatzes werden durch die Wahl des Katalysators und der Katalysatormenge stark beeinflusst. Vor allem spielt hier die Neigung gängiger Stabilisatoren selbst mit dem Oxadiazintrionring bzw. den Isocyanatgruppen abzureagieren eine entscheidende Rolle. Mit Vorteil werden die Katalysatoren zwischen 0,001 - 5,0 Gew.-%, bevorzugt 0,01- 2,0 Gew.-% und besonders bevorzugt 0,05-0,5 Gew.-% eingesetzt.

Geeignete Katalysatoren sind tertiäre Amine wie Trimethylamin, Triethylamin, Tributylamin, Bis-isopropyl-ethylamin, N,N-Dimethylbenzylamin, 1,5-Diazabicyclo-[4.3.0]non-5-en (DBN), 1,8-Diazabicyclo[5.4.0]undec-7-on (DBU), Tetramethylbutandiamin, Tetramethylpropandiamin, Dimethylaminoarylverbindungen wie Dimethylaminobenzol, Dimethylaminopyridin; Alkali- und Erdalkalisalze der Kohlensäure, Ameisensäure, Essigsäure, Propionsäure, Benzoesäure sowie substituierter Benzoesäuren sowie Alkoholate von aliphatischen und aromatischen Hydroxylverbindungen wie Natriumphenolat und Natriummethylat. Auch cyclische aliphatische und cyclisch aromatische Stickstoffverbindungen werden angewendet wie $C_1$-$C_4$-N-Alkylpyrrole, -pyrroline, -pyrrolidine, -pyrazole, -imidazole, -imidazoline, -imidazolidine, die isomere Triazole, die ggf. alkylierten Pyrimidine, Pyridazine, die isomeren Triazine, Chinoline, Isochinoline, Chinoxaline und Acridine. Bevorzugte Katalysatoren sind tertiäre Amine wie Trimethylamin, Triethylamin, Tributylamin, Bis-isopropylethylamin, N,N-Dimethylbenzylamin, 1,5-Diazabicyclo[4.3.0]non-5-en (DBN), 1,8-Diazäbicyclo[5.4.0]undec-7-on (DBU), besonders bevorzugte Katalysatoren sind Triethylamin, Bis-isopropyl-ethylamin, 1,8-Diazabicyclo[5.4.0]undec-7-on (DBU).

Die erfindungsgemäßen Polyisocyanat-Verbindungen müssen gegen vorzeitige Polymersiation stabilisiert werden. Verwendet werden dabei Phenole wie para-Methoxyphenol, 2,5-Di-tert.-Butylhydrochinon oder 2,6-Di-tert.-butyl-4-methylphenol. Geeignet sind auch N-Oxyl-Verbindungen zur Stabilisierung wie z.B. 2,2,6,6-Tetramethylpiperidin-N-Oxid (TEMPO) oder eins seiner Derivate. Ebenso können die Stabilisatoren auch chemisch mit in das Bindemittel eingebaut werden, dabei eignen sich Verbindungen der oben genannten Klassen insbesondere wenn sie noch weitere freie aliphatische Alkoholgruppen oder primäre oder sekundäre Amingruppen tragen und damit über Urethan- oder Harnstoff-Gruppen chemisch gebunden Stabilisatoren darstellen. Hierfür besonders geeignet sind 2,2,6,6-Tetramethyl-4-Hydroxy-piperidin-N-Oxid. Auch andere Radikalfänger wie z. B. Phenothiazin finden Anwendung.

Es ist möglich im Anschluss an das erfindungsgemäße Verfahren weitere in der Polyurethanchemie übliche Reaktionen durchzuführen, um die Produkte weiter zu modifizieren. Freie Isocyanatgruppen können durch gängige Blockierungsmittel blockiert werden. Dies ist insbesondere dann interessant, wenn man die Reaktionstemperatur der

NCO/OH-Reaktion verändern möchte, wenn man bei einem fertig formulierten System das Potlife, also die maximale Verarbeitungszeit vor der Vernetzung, verlängern möchte. Mögliche Blockierungsmittel sind ε-Caprolactam, Methylethylketonoxim, 3,5-Dimethylpyrazol, Diisopropylamin, Diethylmalonat, Imidazol, Diethylamin, Acetessigester.

Weiterhin ist es möglich, wenn die erfindungsgemäßen Produkte noch Isocyanatgruppe enthalten, diese mit Isocyanat-reaktiven Verbindungen umzusetzen. Bevorzugte Isocyanat-reaktive Verbindungen sind beispielsweise ein Diol, Diamin oder ein Aminoalkohol sein, wobei diese auch noch weitere aktivierte Doppelbindungen enthalten können. So finden Ethylenglycol, Diethylenglycol, Triethylenglycol, Teträthylenglycol, Dipropylenglycol, Tripropylenglycol, kurzkettige Polyether auf Basis von Ethylenoxid, Propylenoxid oder Gemische daraus, 1,2- und 1,3-Propandiol, die isomeren Butandiole, Neopentylglycol, 1,6-Hexandiol, 2-Ethyl-1,3-hexandiol, Cyclohexandimethanol, Mono(meth)acrylate des Trimethylolpropans und -ethans, des Glycerins, und deren epoxilierten und propoxylierten Derivate bzw. die durch Veresterung selbiger Alkohole mit Acrylsäure erhältlichen technischen Gemische, 2-Aminoethanol und die isomeren Aminopropanole Verwendung. Auch kurzkettige Polyesterdiole wie z.B. ε-Caprolacton verlängerte Diole wie Ethandiol, 1,2- und 1,3-Propandiol, die isomeren Butandiole, Neopentylglycol, 1,6-Hexandiol, 2-Ethyl-1,3-hexandiol, Cyclohexandimethanol werden verwendet. Bevorzugt sind Diole wie Ethandiol, Hexandiol, Monomethacrylate des Trimethylolpropans und des Glycerins, besonders bevorzugt sind Ethandiol und Hexandiol.

Die Erfindung betrifft auch Beschichtungs-, Klebstoff- und Hartemassensysteme, die die folgenden Komponenten enthalten können:

1.) das erfindungsgemäße Polyisocyanat oder Polyisocyanatfolgeprodukt

2.) gegebenenfalls ein oder mehrere weitere Polyisocyanate, die gegebenenfalls aktivierte Doppelbindungen enthalten

3.) gegebenenfalls ein oder mehrere Initiatoren der radikalischen Polymerisation, die thermisch oder mit energiereicher Strahlung aktivierbar sind,

4.) gegebenenfalls eine oder mehrere mit Isocyanaten reaktive Verbindungen, die gegebenenfalls aktivierte Doppelbindungen enthalten,

5.) gegebenenfalls einen UV-Absorber und/oder einen HALS-Stabilisator zur Verbesserung der Wetterstabilität,

6.) gegebenenfalls übliche Lackadditive wie Verlaufs- und Entlüftungsmittel,

7.) gegebenenfalls Katalysatoren zur Beschleunigung der thermischen Vernetzungsreaktion,

8.) gegebenenfalls Lösungsmittel und

9.) gegebenenfalls Reaktiwerdünner.

Die unter 2.) erwähnten Polyisocyanate basieren bevorzugt auf Hexamethylendiisocyanat, Isophorondiisocyanat, Trimethylhexamethylendisocyanat und weisen bevorzugt Isocyanurat, Allophanat-, Biuret-, Uretdion- und/oder Iminooxadiazintrionstrukturen auf.

Als Initiatoren 3.) für eine radikalische Polymerisation können durch Strahlung und/oder thermisch aktivierbare Initiatoren zum Einsatz kommen. Fotoinitiatoren, die durch UV- oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind aromatische Ketonverbindungen, z.B. Benzophenone in Kombination mit tertiären Aminen, Alkylbenzophenone, 4,4'-Bis(di-methylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone.

Die Fotoinitiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden.

Werden Elektronenstrahlen statt UV-Strahlung verwendet, so benötigt man keinen Photoinitiator. Elektronenstrahlung wird wie dem Fachmann bekannt ist, mittels thermischer Emission erzeugt und über eine Potentialdifferenz beschleunigt. Die energiereichen Elektronen schlagen dann durch eine Titanfolie und werden auf die zu härtenden Bindemittel gelenkt. Die allgemeinen Prinzipien der Elektronenstrahlhärtung sind in "Chemistry & Technology of UV &

EB Formulations for Coatings, Inks & Paints", Vol. 1, P K T Oldring (Ed.), SITA Technology, London, England, S. 101-157, 1991 im Detail beschrieben.

Im Falle einer thermischen Härtung der aktivierten Doppelbindungen, kann diese auch unter Zusatz von thermisch zerfallenden Radikalbildnern erfolgen. Geeignet sind, wie dem Fachmann bekannt ist, z.B. Peroxyverbindungen wie Dialkoxydicarbonate wie z.B. Bis(4-tert-butylcyclohexyl)peroxydicarbonat, Dialkylperoxide wie z.B. Dilaurylperoxid, Perester aromatischer oder aliphatischer Säuren wie z.B. tert.-Butylperbenzoat oder tert.-Amylperoxy 2-ethylhexanoat, anorganische Peroxide wie z. B. Ammoniumperoxodisulfat, Kaliumperoxodisulfat, organische Peroxide wie z.B. 2,2-Bis(tert.-butylperoxy)butan, Dicumylperoxid, tert.-Butylhydroperoxid oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]propionamide}, 2,2'-Azobis{2-methyl-N-[2-(1-hydroxybutyl)]-propionamide, 2,2'-Azobis{2-methyl-N-[1,1-bis(hydroxymethyl)-2-hydroxyethyl] propionamide. Möglich sind auch hochsubstituierte 1,2-Diphenylethane (Benzpinakole), wie z. B. 3,4-Dimethyl-3,4-diphenylhexan, 1,1,2,2-Tetraphenyl-ethandiol-1,2 oder auch deren silylierten Derivate.

Es ist auch möglich eine Kombination von durch UV-Licht und thermisch aktivierbaren Initiatoren zu verwenden.

Die in 4.) mit Isocyanaten reaktiven Verbindungen sind z. B. Polyole. Diese können aus Di-, Tri- und Tetrolen mit Di-, Trisäuren auch ungesättigten Säuren wie Maleinsäure(anhydrid) gewonnen werden (Polyesterpolyole). Zur Erhöhung der notwendigen Doppelbindungsdichte können auch Veresterungsprodukte von niedermolekularen Polyolen wie z. B. Pentaerythrittriacrylat oder Polyesteracrylate wie z.B. Laromer® PE 44F der BASF AG, Deutschland verwendet werden. Auch lassen sich Polyole aus der radikalischen Copolymerisation von Monomeren wie aliphatische Ester der Acryl- bzw. Methacrylsäure, Styrol, Acrylnitril mit hydroxyfunktionellen Monomeren wie Hydroxyalkyl(meth)acrylaten erhalten werden (Polyacrylatpolyole). Verwendet man Glycidylester der (Meth)acrylsäure, so können die erhaltenen Polyacrylatpolyole auch noch mit (Meth)acrylsäure nachträglich modifiziert werden, die vorteilhafterweise auch noch strahlenhärtend sind. Auch Alkoxylierungsprodukte von Di- und Polyolen (Polyetherpolyole) und sterisch gehinderte Amine, wie sie durch die Addition von Maleinsäureester an cycloaliphatische, primäre Amine entstehen (Asparaginsäureester) eignen sich. Auch Polyester der Kohlensäure finden Verwendung (Polycarbonate).

Zur Erhöhung der Wetterstabilität der gehärteten Lackschicht eignen sich die in 5.) erwähnten UV-Absorber und HALS-Stabilisatoren. Erstere sollten einen Absorptionsbereich von maximal 390 nm haben wie Triphenyltriazintypen (z.B. Tinuvin 400 (Handelprodukt der Firma Ciba)) oder Oxalsäuredianilide (z. B. Sanduvor 3206 (Handelprodukt der Firma Clariant)) und werden in 0,5 - 3,5 % bezogen auf Festharz zugegeben. Geeignete HALS-Stabilisatoren sind kommerziell erhältlich (Tinuvin 292 oder Tinuvin 123 (beide Handelprodukte der Firma Ciba) oder Sanduvor 3258 (Handelprodukt der Firma Clariant). Bevorzugte Mengen sind 0,5-2,5 % bezogen auf Festharz.

Die in 6.) erwähnten üblichen Verlaufs- und Entlüftungsadditive basieren in der Regel auf Polyacrylaten und Polysiloxanen.

Die in 7.) erwähnten Katalysatoren sind z.B. Zinn und/oder Zinksalze oder Zinnorganoverbindungen, Zinn- und/oder Zinkseifen wie z.B. Zinnoctoat, Dibutylzinndilaurat, Dibutylzinnoxid oder tertiäre Amine wie z. B. Diazabicyclo[2,2,2]octan (DABCO).

Die in 8.) erwähnten Lösungsmittel sind derartige die gegenüber Isocyanaten und aktivierten Doppelbindungen nicht reaktiv sind. So werden Ester, Ketone, Ether, Etherester, Alkane, oder aromatische Lösungsmittel wie Xylol oder Toluol verwendet.

Die in 9.) erwähnten Reaktiwerdünner sind Verdünnungsmitteln, die bei der UV-Härtung ebenfalls (co)polymerisieren. Solche Reaktivverdünner sind beschrieben in P. K. T. Oldring (Ed.), Chemistry & Technology of UV & EB Formulations For Coatings, Inks & Paints, Vol. 2, 1991, SITA Technology, London, S. 237 - 285. Als Beispiele seien genannt die Ester der Acrylsäure oder Methacrylsäure, bevorzugt der Acrylsäure der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Dreiwertige Alkohole sind Glycerin oder Trimethylolpropan oder deren alkoxylierte Derivate. Vierwertige Alkohole sind Pentaerythrit oder dessen alkoxylierte Derivate.

Werden alle Bestandteile des erfindungsgemäßen Beschichtungssystems als eine Komponente formuliert und sind noch freie Isocyanatgruppen zugegen, weist das System ein begrenztes Pot-Life auf. Daher ist dann eine bevorzugte Formulierungsform ein zweikomponentiges System, wobei Komponente 1 die Bestandteile 1.) und gegebenenfalls 2.) enthält, die Komponente 2 die Bestandteile 4.) enthält. Die anderen Komponenten können nach Bedarf sowohl in Komponente 1 oder 2 oder gar in beiden mit einformuliert werden. Die jeweiligen Komponenten weisen dann die Lagerstabilität der Einzelkomponenten auf. Vor der Anwendung werden dann die Komponenten im angegebenen Verhältnis gemischt oder über sog. Zweikomponentenanlagen appliziert.

Das Auftragen des Beschichtungsmittels auf das zu beschichtende Material erfolgt mit den in der Lacktechnologie üblichen und bekannten Methoden wie Spritzen, Rakeln, Walzen, Gießen, Tauchen, Schleudern, Streichen oder Sprühen.

Die Aushärtung kann durch gleichzeitige und/oder zeitlich getrennte Abfolge der folgend beschriebenen Arbeitsschritte erfolgen:

- ggf. durch Ablüften der Lösungsmittel. Dies erfolgt bei Raumtemperatur, ggf. bei erhöhter Temperatur, vorzugsweise bei 60-90°C

- bei Verwendung von Photoinitiatoren in 3.)erfolgt die Strahlungshärtung bevorzugt durch Einwirkung energiereicher Strahlung, also UV-Strahlung oder Tageslicht, z.B. Licht der Wellenlänge 200 bis 700 nm, oder durch Bestrahlen mit energiereichen Elektronen (Elektronenstrahlung, 150 bis 300 keV). Als Strahlungsquellen für Licht oder UV-Licht dienen beispielsweise Hoch- oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können mit Filtern ausgestattet sein, die den Austritt eines Teils des emittierten Strahlerspektrums verhindern. Beispielsweise kann z.B. aus arbeitshygienischen Gründen die dem UV-C oder UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 $mJ/cm^2$.

Die Bestrahlung kann gegebenenfalls auch unter Ausschluss von Sauerstoff, z. B. unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.
Je nach Strahlungsdosis und Aushärtungsbedingungen sind Typ und Konzentration des gegebenenfalls verwendeten Initiators in dem Fachmann bekannter Weise zu variieren.
Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 $mJ/cm^2$ gemessen im Wellenlängebereich von 200 bis 600 nm verwendet.

- Bei Verwendung von thermisch aktivierbaren Initiatoren in 3.) durch Erhöhung der Temperatur.

- Durch Vernetzung der NCO-haltigen Bestandteile mit den mit NCO-haltigen Bestandteilen reaktiven Bestandteile. Dies kann bei Raumtemperatur oder erhöhter Temperatur, vorteilhaft bis 150°C erfolgen. Als Katalysatoren kommen die Verbindungen, die in 7.) genannt sind in Frage. Ein bevorzugtes Aushärtungsverfahren besteht darin, dass die Reaktion der NCO-haltigen Bestandteile teilweise während der UV-Härtung (Bestrahlung) durch erhöhte Temperatur bzw. längerer UV-Strahlungszeit bei unveränderter Temperatur abläuft. Auch IR-Strahlung kann anstatt oder in Kombination statt erhöhter Temperatur verwendet werden.

Vorteilhaft kann ein Dual Cure System eingesetzt werden, wenn zunächst durch einen ersten Arbeitsschritt, vorzugsweise strahleninduzierte Polymerisation (vor)vernetzt und durch einen zweiten Arbeitsschritt (z.B. NCO-OH-Reaktion) nachvernetzt wird. Zwischen diesen beiden Schritten hat die Beschichtung eine hinreichende Beständigkeit, um zwischengelagert und z.B. verformt zu werden. Anschließend wird eine Endhärtung und die gewünschte Stabilität im zweiten Schritt erhalten.

Die erfindungsgemäßen Bindemittel können auch als Klebstoffe und Dichtungsmassen verwendet werden. Voraussetzung hierbei ist es im Falle der UV-Stahlenhärtung, dass mindestens eines der beiden zu verklebenden oder miteinander abzudichtenden Substrate für UV-Strahlung durchlässig, also i. d. R. transparent sein muss. Bei der Elektronenstrahlung ist auf eine hinreichende Durchlässigkeit für Elektronen zu achten.

Geeignete Substrate bestehen aus Holz, Metall, Kunststoff, mineralischen Stoffen und/oder bereits beschichteten Substraten bzw. Mischung aus diesen Substraten.

Die erfindungsgemäßen Bindemittel eigenen sich auch als Härtmassen in Form-, Spritz- und Druckgussverfahren. Dabei wird ein zu beschichtendes Objekt in eine Form eingebracht, wobei noch ein Abstand von maximal 1 cm, bevorzugt kleiner 0,3 cm zwischen Objektoberfläche und Form verbleibt. Das erfindungsgemäße Bindemittel wird nun über einen Extruder in die Form verpresst und anschließend thermisch und/oder mittels Strahlung gehärtet.

## Beispiele

Die NCO-Gehalte wurden nasschemisch ermittelt.

Für die Gehaltsbestimmung der Uretdion-, Allophanat-, Urethan- und Oxadiazintriongruppen wurde ein 100 MHz $^{13}C$-NMR-Spektrum in $CDCl_3$ mit einem Relaxationsdelay von 4s, 2000 Scans, einer Akquisitionszeit von 1,03 Sekunden und einem Anregungswinkel von 30°C gemessen. Anschließend wurden alle Signale im Carbonylbereich sowie das NCO-Signal integriert und den verschiedenen Strukturgruppen zugeordnet: NCO $\delta(^{13}C)$ = 121,4; Oxadiazintrion $\delta$ ($^{13}C$) = 143,9 (2C) und $\delta$ ($^{13}C$) = 147,8 (1C); Allophanat $\delta$ ($^{13}C$) = 153,8 (1C), 155,7 (1C), Urethan $\delta$ ($^{13}C$) = 156,3 (1C), Uretdion $\delta$ ($^{13}C$) = 157,1 (2C). Aus den Integralen wurden die molaren Verhältnisse der Substrukturen ermittelt und auf Gewichtsprozent umgerechnet. Dabei wurde jeder Substruktur ihr entsprechendes Molekulargewicht zugeordnet. Zur Berechnung der Gewichtsprozente werden zusätzlich die Restgruppengewichte benötigt. (NCO: 42g/mol (Rest 42 g/mol = 3 $CH_2$), Oxadiazintrion: 128 g/mol (Rest 84 g/mol = 6 $CH_2$), Allophanat: 101 g/mol (Rest 183 g/mol = 6 CH2 + $CH_2CH_2$-OCO-CH=$CH_2$ im Fall des Hydroxyethylacrylats), Urethan: 59 g/mol (Rest 141 g/mol = 3 $CH_2$ + $CH_2CH_2$-OCO-CH=$CH_2$ im Fall des Hydroxyethylacrylats), Uretdion 84 g/mol (Rest 84 g/mol = 6 $CH_2$).

Erfindungsgemäße Beispiele:
In den nachfolgenden Beispielen beziehen sich alle Prozentangaben auf das Gewicht.

### Beispiel 1

In einem Dreihalskolben mit Rückflusskühler und Rührer werden 69,54 g Baymicron Oxa WM 06 (Handelsprodukt der Firma Bayer AG) und 0,1g 2,6-Di-tert.-butyl-4-methylphenol bei 50°C vorgelegt und 0,1 g Triethylamin, 30,08g 2-Hydroxyethylacrylat und 0,1 g 2,6-Di-tert.-butyl-4-methylphenol innerhalb von 20 Minuten zugetropft. Das Reaktionsgemisch wird bei 50°C erst bei Normaldruck und sobald die Gasentwicklung abnimmt (ca. 2h) unter Vakuum (ca. 25 mbar) ca. 3h gerührt bis keine Gasentwicklung mehr stattfindet. Anschließend werden 0,1 g 2,6-Di-tert.-butyl-4-methylphenol zugeben und 30 Minuten bei 50°C eingelöst. Anschließend 20 Minuten mit Luft (41/h) sättigen. Man erhält ein Produkt mit einer Viskosität von 1185 mPas/23°C. NCO-Gehalt 10,9 %, Oxadiazintrion-Gehalt = 1,3%, Allophanatgehalt 19,2 %, Urethangehalt 6,5 %, Uretdiongehalt 1,0 %.

### Beispiel 2

In einem Dreihalskolben mit Rückflusskühler, Rührer und Gaseinleitung werden 52,86 g Baymicron Oxa WM 06 und 0,1 g 2,6-Di-tert.-butyl-4-methylphenol bei 60°C vorgelegt und es wird Luft durchgeleitet (1/4 Kolbenvolumen pro Stunde). Nun werden 0,1 g 2,6-Di-tert.-butyl-4-methylphenol und 46,74 g 2-Hydroxyethylacrylat innerhalb von 5 Minuten zugetropft (60°C halten) und weitere 1 h gerührt. Das Reaktionsgemisch wird auf 50°C abgekühlt und 0,1 g Triethylamin zugegeben (Gasentwicklung, Lufteinleitung nicht unterbrechen). Sobald die Gasentwicklung abnimmt (ca. 4 h) wird unter Vakuum (ca. 20 mbar) weitere ca. 2.5 h gerührt bis keine Gasentwicklung mehr stattfindet. Anschließend 0,1 g 2,6-Di-tert.-butyl-4-methylphenol zugeben und 30 Minuten bei 50°C einlösen. Man erhält ein Produkt mit einer Viskosität von 8215 mPas/23°C. NCO-Gehalt 0,7 %, Oxadiazintrion-Gehalt = 0,0 %, Allophanatgehalt 14,7 %, Urethangehalt 15,6 %, Uretdiongehalt 0,5 %.

### Beispiel 3

In einem Dreihalskolben mit Intensivkühler und Rührer werden 1000 g Desmodur H (Handelsprodukt der Firma Bayer AG) bei RT vorgelegt und mit $CO_2$ 2,5 h lang gesättigt. Unter weiterer $CO_2$-Einleitung wird auf 45°C erwärmt und es werden 1 g Tri-n-butylphosphin zügig zugesetzt und auf 60°C erwärmt. Der NCO-Gehalt wird verfolgt. Bei NCO < 30 % (ca. 19 h) werden 2,76 g Toluolsulfonsäuremethylester zugegeben und weitere 2h bei 80°C gerührt. Die Rohware von 1065g (NCO = 28,9 %) wird im Fallfilmverdampfer von monomeren HDI befreit (Vor- und Hauptverdampfer 120°C/0,2 mbar). Ausbeute 641g (NCO = 16,8)

### Beispiel 4

In einem Dreihalskolben mit Rückflusskühler und Rührer werden 0,1 g 2,6-Di-tert.-butyl-4-methylphenol und 67,87 g des Produkts aus Beispiel 3 bei 50°C vorgelegt und 0,1 g 2,6-Di-tert.-butyl-4-methylphenol, 0,08 g Triethylamin und 31,49 g 2-Hydroxyethylacrylat innerhalb von 20 Minuten so zugetropft, dass die Temperatur von 50°C gehalten wird. Das Reaktionsgemisch wird bei 50°C erst bei Normaldruck gerührt und sobald die Gasentwicklung abnimmt (ca. 2 h) 0,1 g 2,6-Di-tert.-butyl-4-methylphenol und 0,001 g 2,2,6,6-Tetramethyl-piperidin-1-oxyl zugegeben und unter Vakuum (ca. 25 mbar) weitere ca. 3.5 h gerührt bis keine Gasentwicklung mehr stattfindet. Anschließend werden 0,1 g 2,6-Di-tert.-butyl-4-methylphenol und 0,16 g Dibutylphosphat zugeben und 30 Minuten bei 50°C einlösen. Man erhält

ein Produkt mit einer Viskosität von 5695 mPas/23°C. NCO-Gehalt 7,7 %, Oxadiazintrion-Gehalt = 2,58 %, Allophanatgehalt 19,7 %, Urethangehalt 7,2 %, Uretdiongehalt 1,0%.

## Beispiel 5

In einem Dreihalskolben mit Rückflusskühler und Rührer werden 421,67 g 2-Hydroxyethylacrylat und 0,9 g Dibutylzinnoxid vorgelegt und auf 110°C erwärmt. Nun werden 1077,43 g ε-Caprolacton innerhalb 1 h zudosiert und weitere 19 h bei 110°C gerührt. Man erhält einen Monoalkohol mit der OHZ=136.

## Beispiel 6

In einem Dreihalskolben mit Rückflusskühler, Rührer und Gaseinleitungsrohr werden 778,61 g Baymicron Oxa WM 06 und 2,03 g 2,6-Di-tert.-butyl-4-methylphenol bei 60°C vorgelegt. Wenn das 2,6-Di-tert.-butyl-4-methylphenol gelöst ist wird Luft eingeleitet (21/h). Nach 40 Minuten werden 2,03 g 2,6-Di-tert.-butyl-4-methylphenol, 10,15 g 1,8-Diazabicyclo[5.4.0]undec-7-on und 1205,15 g des Produktes aus Beispiel 5 zugeben. Die Reaktionsmischung beginnt zu schäumen und wird bei 50°C 3h gerührt. Nun gibt man 0,04 g 2,2,6,6-Tetramethyl-4-hydroxypiperidin-1-oxyl zu und legt Vakuum (20 mbar) an. Nach Ende der Gasentwicklung Vakuum brechen und 0,1g 2,6-Di-tert.-butyl-4-methylphenol einlösen (30min.) und derweil Luft einleiten. Man erhält ein Produkt mit einer Viskosität von 5000 mPas/23°C. NCO-Gehalt 4,9 %, Oxadiazintrion-Gehalt = 0,7 %, Allophanatgehalt 11,2 %, Urethangehalt 3,0 %, Uretdiongehalt 0,5 %.

## Beispiel 7

In einem Dreihalskolben mit Rückflusskühler und Rührer werden 491,91 g des Produkts aus Beispiel 1, 7,84 g Ethandiol und 0,25 g Dibutylzinndilaurat vorgelegt und 3 h bei 50°C gerührt. Man erhält ein Produkt mit einer Viskosität von 5680 mPas/23°C. NCO-Gehalt 8,1 %, Oxadiazintrion-Gehalt = 1,07 %, Allophanatgehalt 17,63 %, Urethangehalt 9,04 %, Uretdiongehalt 0,91 %.

## Beispiel 8

In einem Druckkesselreaktor werden 3600 g Butylacetat vorgelegt und auf 165°C (ca. 2.3 bar) aufgeheizt. Innerhalb von 3 h wird nun eine Lösung aus 2772,0 g Glycidylmethacrylat, 3207,6 g Methylmethacrylat und 1663,2 g n-Butylacrylat eindosiert. Gleichzeitig wird 3,5 h lang eine Lösung aus 277,2 g Peroxan DB (Di-tert.-butylperoxide, Handelsprodukt der Firma Pergan GmbH) und 480 g Butylacetat eindosiert. Es wird eine Stunde weiter gerührt und dann auf 40°C abgekühlt. Über einen Filter T5500 wird abgedrückt und abgefüllt.

## Beispiel 9

In einem Dreihalskolben mit Rückflusskühler, Rührer und Gaseinleitungsrohr werden 3567,88 g des Produkts aus Beispiel 8, 417,78 g Acrylsäure, 2,75 g Triethylbenzylammoniumchlorid, 2,75 g 2,6-Di-tert.-butyl-4-methylphenol, 0,56 g 2,5-Di-tert.-butyl-hydrochinon und 8,17 g p-Methoxyphenol vorgelegt und unter Lufteinleitung auf 90°C erwärmt. Nach 120 h wird abgekühlt. Man erhält ein Produkt mit einer Viskosität von 735 mPas/23°C.

## Anwendungsbeispiele

Die Produkte wurden mit dem Polyol im molaren Verhältnis NCO:OH 1:1 vermischt und mit 5 % Irgacure 184 (Handelsprodukt der Firma Ciba) versetzt. Anschließend wurde auf eine Metallplatte mit einem Handcoater beschichtet (Schichtdicke ca. 60 μm). Nach einer Ablüftphase von 5 Minuten bei 60°C wurde mit UV-Licht gehärtet (Bandanlage, 1 Strahler, Qücksilberhochdruckstrahler 80 W/cm Lampenlänge [CK-Strahler, Handelsprodukt der Firma IST, Metzingen, DE], zwei mal bestrahlt mit einer Bandgeschwindigkeit von 5 m/min). Anschließend wurde die Chemikalienbeständigkeit mit 200 Acetondoppelhüben bestimmt. Dabei wurde jeweils ein mit Aceton getränkter Wattebäusche 200 mal mit einer Kraft von ca. einem Kilo über die Oberflächen hin- und herbewegt. Das Ergebnis wurde visuell abgemustert. Das Ergebnis wurde in Form von Noten (0 - unverändert bis 5 zerstört) festgehalten. Zudem wurde die Pendelhärte bestimmt. Nach der thermischen Nachvernetzung (30 Min. 120°C) wurden diese Prüfungen wiederholt.

| Beispiel | Härter | Polyol | Irgacure 184 |
|---|---|---|---|
| 10 | 5,11 g Beispiel 1 | 9,13 g Beispiel 9 | 0,75 g |

(fortgesetzt)

| Beispiel | Härter | Polyol | Irgacure 184 |
|---|---|---|---|
| 11 | 12,77 g Beispiel 2 | 1,48 g Beispiel 9 | 0,75 g |
| 12 | 8,84 g Beispiel 6 | 5,40 g Beispiel 9 | 0,75 g |
| 13 | 6,26 g Beispiel 4 | 7,98 g Beispiel 9 | 0,75 g |
| 14 | 6,10 g Beispiel 7 | 8,15 g Beispiel 9 | 0,75 g |

| | 5 Min 60°C und 2 mal 5 m/min UV | | 30 Min 120°C | |
|---|---|---|---|---|
| Beispiel | 200 Acetondoppelhübe | Pendelhärte | 200 Acetondoppelhübe | Pendelhärte |
| 10 | 5 | 109 | 0 | 174 |
| 11 | 0 | 158 | 0 | 162 |
| 12 | 3 | 70 | 2 | 100 |
| 13 | 3 | 126 | 0 | 181 |
| 14 | 0 | 128 | 0 | 177 |

| Beispiel | Härter | Polyol | UV-Initiator |
|---|---|---|---|
| 15 | 4,57 g Beispiel 1 | 9,67 g Desmophen 870 A | 0,75 g Irgacure 184 |
| 16 | 4,97 g Beispiel 1 | 7,36 g Desmophen 870 A<br>1,93 g Pentaerythrittriacrylat | 0,75 g Irgacure 184 |
| 17 | 4,77 g Beispiel 1 | 7,06 g Desmophen 870 A<br>2,43 g Laromer PE 44F | 0,75 g Irgacure 184 |
| 18 | 7,23 g Beispiel 1 | 7,02 g Desmophen VP LS 2089 | 0,75 g Irgacure 184 |
| 19 | 6,89 g Beispiel 1 | 4,68 g Desmophen VP LS 2089<br>2,67 g Pentaerythrittriacrylat | 0,75 g Irgacure 184 |

| | 5 Min 60°C und 2 mal 5 m/min UV | | 30 Min 120°C | |
|---|---|---|---|---|
| Beispiel | 200 Acetondoppelhübe | Pendelhärte | 200 Acetondoppelhübe | Pendelhärte |
| 15 | 5 | 26 | 5 | 158 |
| 16 | 5 | 56 | 0 | 170 |
| 17 | 5 | 27 | 0 | 176 |
| 18 | 3 | 57 | 0 | 184 |
| 19 | 0 | 119 | 0 | 194 |

**Beispiel 20**

In einem Dreihalskolben mit Rückflusskühler und Rührer werden 125,85 g Baymicron Oxa WM 06 (Handelsprodukt der Firma Bayer AG), 97,55 g Demodur N3600 und 0,3 g 2,6-Di-tert.-butyl-4-methylphenol bei 50°C vorgelegt und 0,3 g Triethylamin, 75,40 g 2-Hydroxyethylacrylat und 0,3 g 2,6-Di-tert.-butyl-4-methylphenol innerhalb von 20 Minuten zugetropft. Das Reaktionsgemisch wird bei 50°C erst bei Normaldruck und sobald die Gasentwicklung abnimmt (ca. 2h) unter Vakuum (ca. 25 mbar) ca. 3 h gerührt bis keine Gasentwicklung mehr stattfindet. Anschließend werden 0,1 g 2,6-Di-tert.-butyl-4-methylphenol zugeben und 30 Minuten bei 50°C eingelöst. Anschließend 20 Minuten mit Luft

(41/h) sättigen. Man erhält ein Produkt mit einer Viskosität von 3900 mPas/23°C. NCO-Gehalt 11,3 %.

**Beispiel 21**

In einem Dreihalskolben mit Rückflusskühler und Rührer werden 810,76 g Baymicron Oxa WM 06 (Handelsprodukt der Firma Bayer AG), 11,72g 1,2-Ethandiol und 1,5g Triethylamin bei 50°C vorgelegt und 1 h bei 50°C gerührt. Anschließend werden 673,02 g 2-Hydroxyethylacrylat und 3,0 g 2,6-Di-tert.-butyl-4-methylphenol innerhalb von 60 Minuten zugetropft. Das Reaktionsgemisch wird bei 50°C erst bei Normaldruck und sobald die Gasentwicklung abnimmt (ca. 2h) unter Vakuum (ca. 25 mbar) ca. 3 h gerührt bis keine Gasentwicklung mehr stattfindet. Anschließend 20 Minuten mit Luft (41/h) sättigen. Es wird anschließend solange bei 60°C gerührt, bis der NCO-Gehalt unter 0,1 % liegt. Man erhält ein Produkt mit einer Viskosität von 31500 mPas/23°C. NCO-Gehalt 0,0 %.

## Patentansprüche

1. Verfahren zur Herstellung eines Polyisocyanats oder eines Polyisocyanatfolgeprodukts enthaltend mindestens eine Allophanatgruppe, die an dem über zwei Einfachbindungen gebundenen Sauerstoffatom der Allophanatgruppe mindestens eine Acrylat-, Methacrylat- oder Vinylether-Doppelbindung trägt, **dadurch gekennzeichnet, dass** ein Polyisocyanat oder ein Polyisocyanatfolgeprodukt enthaltend mindestens ein Oxadiazintriongruppe (Formel 1)

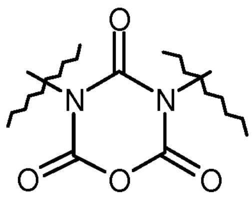

Formel 1

mit einem Acrylat-, Methacrylat- oder Vinylether-Doppelbindung haltigen Alkohol bei Temperaturen zwischen -20 bis 100°C reagiert.

2. Verfahren nach Anspruch 1, **dadurch gekennzeichnet, dass** die Reaktion in Gegenwart eines basischen Katalysators erfolgt.

3. Verfahren nach Anspruch 2, **dadurch gekennzeichnet, dass** der Katalysator einen pkA von > 7.5 aufweist.

4. Verfahren nach Anspruch 2, **dadurch gekennzeichnet, dass** der Katalysator ein Amin enthält.

5. Verfahren nach Anspruch 1, **dadurch gekennzeichnet, dass** die Reaktion in Gegenwart von mindestens einem Stabilisator durchgeführt wird.

6. Verfahren nach Anspruch 1, **dadurch gekennzeichnet, dass** die Reaktion in Gegenwart von 2,6-Di-tert.-butyl-4-methylphenol durchgeführt wird.

7. Verfahren nach Anspruch 1, **dadurch gekennzeichnet, dass** das Polyisocyanat enthaltend eine Oxadiazintriongruppe aus 1,6-Hexamethylendiisocyanat hergestellt ist.

8. Verfahren nach Anspruch 1, **dadurch gekennzeichnet, dass** das Polyisocyanat freie Isocyanatgruppen oder verkappte Isocyanatgruppen trägt.

9. Verfahren nach Anspruch 1, **dadurch gekennzeichnet, dass** die Reaktion in Gegenwart eines weiteren Polyisocyanats oder eines Polyisocyanatfolgeprodukts durchgeführt wird, welches 0.1-10 Gew.-% Uretdiongruppen aufweist.

10. Verfahren nach Anspruch 1, **dadurch gekennzeichnet, dass** zusätzlich ein polyfunktioneller Alkohol verwendet wird.

11. Polyisocyanat oder Polyisocyanatfolgeprodukt hergestellt nach dem Verfahren gemäß Anspruch 1.

12. Polyisocyanat oder Polyisocyanatfolgeprodukt gemäss Anspruch 11 enthaltend einen Stabilisator ausgewählt aus der Gruppe der Phenole, der HALS-Amine, oder der Phenothiazine.

13. Polyisocyanat oder Polyisocyanatfolgeprodukt nach Anspruch 11 enthaltend Strukturelemente der Formel 2

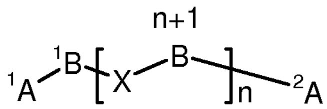

Formel 2

wobei

$^{1}$A, $^{2}$A für Isocyanat oder für gleiche oder verschiedene Strukturen von Isocyanat-Folgeprodukten stehen, welche Iminooxadiazindion-, Isocyanurat-, Uretdion-, Urethan-, Allophanat-, Biuret- Hamstoff- oder Oxadiazintrion-Strukturen enthalten und N-ständig die untengenannten Reste $^{1}$B bis $^{n+1}$B tragen,
$^{1}$B bis $^{n+1}$B gleiche oder verschiedene Reste sind, die durch gedankliche Abstraktion der beiden Isocyanatgruppen eines aliphatischen, cycloaliphatischen oder araliphatischen Diisocyanats entstehen,
X für eine der Strukturen X-1 und/oder X-2 steht,
sowie gegebenenfalls anteilig für gleiche oder verschiedene Reste von Isocyanat-Folgeprodukten steht, welche Iminooxadiazindion-, Isocyanurat-, Uretdion-, Urethan-, Allophanat-, Biuret- Harnstoff- oder Oxadiazintrion-Strukturen enthalten,

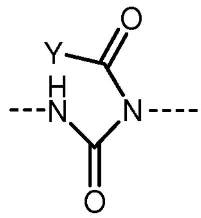

Struktur X-1

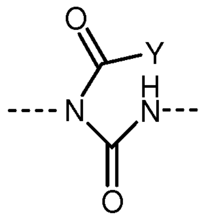

Struktur X-2

Y für einen organischen Rest steht, der mindestens eine aktivierte Doppelbindung enthält;
n eine Zahl größer als eins und kleiner als 20 ist, und dabei das Mittel aller im erfindungsgemäßen Verbindung vorliegenden Moleküle der Formel 2 darstellt.

14. Beschichtungs-, Klebstoff-, Härtmassensysteme und Dichtungsmassen enthaltend Verbindungen hergestellt nach dem Verfahren des Anspruch 1.

15. Substrate mit einem Überzug enthaltend ein Reaktionsprodukt des Polyisocyanatgemisches oder des Gemischs von Polyisocyanatfolgeprodukten des Anspruchs 11.

16. Substrate gemäss Anspruch 15, wobei das Substratmaterial Holz, Metall, Kunststoff und/oder mineralische Stoffe enthält.

**Claims**

1. Process for preparing a polyisocyanate or a polyisocyanate conversion product comprising at least one allophanate

group which, on the allophanate group oxygen atom bonded via two single bonds, bears at least one acrylate double bond, methacrylate double bond or vinyl ether double bond, **characterized in that** a polyisocyanate or a polyisocyanate conversion product comprising at least one oxadiazinetrione group (formula 1)

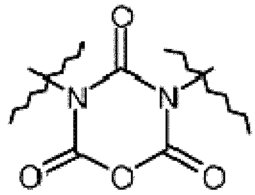

formula 1

is reacted with an alcohol containing acrylate, methacrylate or vinyl ether double bond at temperatures between -20 to 100°C.

**2.** Process according to Claim 1, **characterized in that** the reaction takes place in the presence of a basic catalyst.

**3.** Process according to Claim 2, **characterized in that** the catalyst has a pKa of > 7.5.

**4.** Process according to Claim 2, **characterized in that** the catalyst comprises an amine.

**5.** Process according to Claim 1, **characterized in that** the reaction is carried out in the presence of at least one stabilizer.

**6.** Process according to Claim 1, **characterized in that** the reaction is carried out in the presence of 2,6-di-tert-butyl-4 methylphenol.

**7.** Process according to Claim 1, **characterized in that** the polyisocyanate comprising an oxadiazinetrione group is prepared from hexamethylene 1,6-diisocyanate.

**8.** Process according to Claim 1, **characterized in that** the polyisocyanate bears free isocyanate groups or capped isocyanate groups.

**9.** Process according to Claim 1, **characterized in that** the reaction is carried out in the presence of a further polyisocyanate or a polyisocyanate derivative which has 0.1-10 wt% of uretdione groups.

**10.** Process according to Claim 1, **characterized in that** additionally a polyfunctional alcohol is used.

**11.** Polyisocyanate or polyisocyanate derivative prepared by the process according to Claim 1.

**12.** Polyisocyanate or polyisocyanate derivative according to Claim 11, comprising a stabilizer selected from the group of phenols, HALS amines, or phenothiazines.

**13.** Polyisocyanate or polyisocyanate conversion product according to Claim 11, comprising structural elements of formula 2

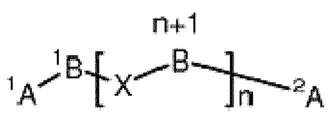

formula 2

wherein

$^{1}A$, $^{2}A$ stand for isocyanate or for identical or different structures of isocyanate conversion products which comprise iminooxadiazinedione, isocyanurate, uretdione, urethane, allophanate, biuret, urea or oxadiazinetrione structures and bear, in the N position, the radicals $^{1}B$ to $^{n+1}B$ stated below,

$^{1}B$ to $^{n+1}B$ are identical or different radicals which are formed by theoretical abstraction of the two isocyanate groups of an aliphatic, cycloaliphatic or araliphatic diisocyanate,
X stands for one of the structures X-1 and/or X-2, and also, optionally proportionally, stands for identical or different radicals of isocyanate derivatives which comprise iminooxadiazinedione, isocyanurate, uretdione, urethane, allophanate, biuret, urea or oxadiazinetrione structures,

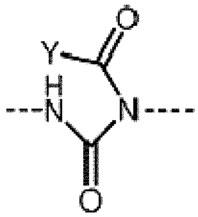

structure X-1

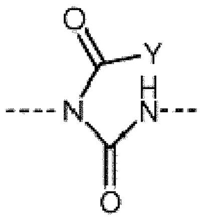

structure X-2

Y stands for an organic radical which comprises at least one activated double bond;
n is a number greater than one and less than 20, and represents the average of all of the molecules of formula 2 that are present in the compound of the invention.

**14.** Coating systems, adhesive systems, curing-compound systems and sealants comprising compounds prepared by the process according to Claim 1.

**15.** Substrates with a coating comprising a reaction product of the polyisocyanate mixture or of the mixture of polyisocyanate conversion products according to Claim 11.

**16.** Substrates according to Claim 15, wherein the substrate material comprises wood, metal, plastic and/or mineral substances.

### Revendications

**1.** Procédé de fabrication d'un polyisocyanate ou d'un produit dérivé de polyisocyanate contenant au moins un groupe allophanate, qui porte sur l'atome d'oxygène relié par deux simples liaisons du groupe allophanate au moins une double liaison acrylate, méthacrylate ou éther de vinyle, **caractérisé en ce qu'**un polyisocyanate ou un produit dérivé de polyisocyanate contenant au moins un groupe oxadiazine-trione (formule 1)

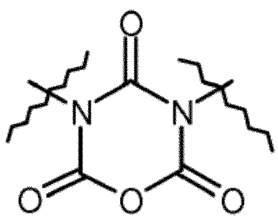

Formule 1

est mis en réaction avec un alcool contenant une double liaison acrylate, méthacrylate ou éther de vinyle à des températures comprises entre -20 et 100 °C.

**2.** Procédé selon la revendication 1, **caractérisé en ce que** la réaction a lieu en présence d'un catalyseur basique.

3. Procédé selon la revendication 2, **caractérisé en ce que** le catalyseur présente un pkA > 7,5.

4. Procédé selon la revendication 2, **caractérisé en ce que** le catalyseur contient une amine.

5. Procédé selon la revendication 1, **caractérisé en ce que** la réaction est réalisée en présence d'au moins un stabilisateur.

6. Procédé selon la revendication 1, **caractérisé en ce que** la réaction est réalisée en présence de 2,6-di-tert.-butyl-4-méthylphénol.

7. Procédé selon la revendication 1, **caractérisé en ce que** le polyisocyanate contenant un groupe oxadiazine-trione est fabriqué à partir de diisocyanate de 1,6-hexaméthylène.

8. Procédé selon la revendication 1, **caractérisé en ce que** le polyisocyanate porte des groupes isocyanate libres ou des groupes isocyanate coiffés.

9. Procédé selon la revendication 1, **caractérisé en ce que** la réaction est réalisée en présence d'un autre polyisocyanate ou d'un produit dérivé de polyisocyanate, qui comprend 0,1 à 10 % en poids de groupes uretdione.

10. Procédé selon la revendication 1, **caractérisé en ce qu'**un alcool polyfonctionnel est en outre utilisé.

11. Polyisocyanate ou produit dérivé de polyisocyanate fabriqué par le procédé selon la revendication 1.

12. Polyisocyanate ou produit dérivé de polyisocyanate selon la revendication 11, contenant un stabilisateur choisi dans le groupe des phénols, des amines HALS ou des phénothiazines.

13. Polyisocyanate ou produit dérivé de polyisocyanate selon la revendication 11, contenant des éléments structuraux de formule 2

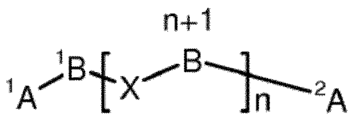

Formule 2

dans laquelle

> $^{1}A$, $^{2}A$ représentent un isocyanate ou des structures identiques ou différentes de produits dérivés d'isocyanate, qui contiennent des structures iminooxadiazine-dione, isocyanurate, uretdione, uréthane, allophanate, biuret, urée ou oxadiazine-trione, et portent sur N les radicaux $^{1}B$ à $^{n+1}B$ mentionnés ci-dessous,
> $^{1}B$ à $^{n+1}B$ sont des radicaux identiques ou différents, qui sont formés par abstraction mentale des deux groupes isocyanate d'un diisocyanate aliphatique, cycloaliphatique ou araliphatique,
> X représente une des structures X-1 et/ou X-2,

et représente éventuellement en partie des radicaux identiques ou différents de produits dérivés d'isocyanate, qui contiennent des structures iminooxadiazine-dione, isocyanurate, uretdione, uréthane, allophanate, biuret, urée ou oxadiazine-trione,

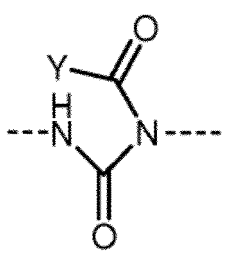

Structure X-1

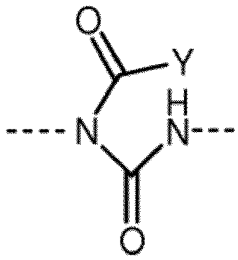

Structure X-2

Y représente un radical organique qui contient au moins une double liaison activée ;
n est un nombre supérieur à un et inférieur à 20, et représente la moyenne de toutes les molécules de formule 2 présentes dans le composé selon l'invention.

**14.** Systèmes de matériaux de revêtement, adhésifs, de durcissement et matériaux d'étanchéité, contenant des composés fabriqués par le procédé selon la revendication 1.

**15.** Substrat comprenant un revêtement contenant un produit de réaction du mélange de polyisocyanate ou du mélange de produits dérivés de polyisocyanate selon la revendication 11.

**16.** Substrats selon la revendication 15, dans lesquels le matériau de substrat contient du bois, un métal, un plastique et/ou des matières minérales.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4342793 A
- EP 0928800 A
- EP 0682012 A
- GB PS994890 A
- EP 0000194 A
- EP 0712840 A
- EP 0867457 A
- DE 19860041 A
- EP 0825211 A
- DE 167066


### In der Beschreibung aufgeführte Nicht-Patentliteratur


- Chemistry & Technology of UV & EB Formulations For Coatings. Inks & Paints. SITA Technology, 1991, vol. 2, 237-285
- Chemistry & Technology of UV & EB Formulations for Coatings. Inks & Paints. SITA Technology, 1991, vol. 1, 101-157